# EUROPEAN PATENT APPLICATION

(11) **EP 4 822 616 A1**
(43) Date of publication of application: **14.10.2026**
(21) Application number: 26168014.4
(22) Date of filing: 26.03.2026
(51) Int. Cl.: G06Q 10/04, G01W 1/10, G06Q 50/06, H02J 3/00

(54) **TECHNIQUES FOR PREDICTING SOLAR POWER GENERATION**

(30) Priority: 09.04.2025 US 202519174201
(71) Applicant: Itron, Inc., Liberty Lake, WA 99019 (US)
(72) Inventor: MONFORTE, Frank Anthony, Liberty Lake, 99019 (US)
(74) Representative: Morrall, Jonathan Ian McLachlan

(57) **Abstract**

Techniques for forecasting solar power generation include determining, solar irradiance levels for a region; determining, based on the solar irradiance levels, a speed, a direction, and positions for clouds; generating, based on the positions of the clouds at a first time, a map of estimated cloud cover levels for sub-regions of the region; generating, for each of a plurality of different time periods after the first time, respective maps of predicted cloud cover levels for the sub-regions, wherein the respective maps of predicted cloud cover levels are generated by projecting the map of estimated cloud cover levels forward in time based on the direction and the speed of the clouds and an amount of time after the first time; and predicting, based on the respective maps of predicted cloud cover levels, an amount of solar power generation for a photovoltaic installation located in a first sub-region of the region.

## Description

### BACKGROUND

### Field of the Various Embodiments

The various embodiments relate generally to electricity production systems and more specifically to techniques for predicting solar power generation.

### Description of the Related Art

Electricity generation systems are often supplemented by one or more photovoltaic installations, such as roof-mounted residential solar power generation installations. The presence of these photovoltaic installations allows an electrical utility to meet electricity demand and consumption requirements using fewer non-solar electricity generation facilities (e.g., coal-fired power plants, hydroelectric dams, etc.), which reduces electricity production costs. However, to meet the demand and consumption requirements of consumers and avoid brown outs, the electrical utility needs to be able to accurately predict the amount of solar power being generated in a geographic region to scale production from the non-solar electricity generation facilities appropriately.

### BRIEF DESCRIPTION OF THE DRAWINGS

So that the manner in which the features of the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 illustrates a flow diagram for forecasting solar power generation for a geographic region, according to various embodiments;
FIG. 2 is a block diagram illustrating a system for forecasting solar power generation for a region, according to various embodiments;
FIG. 3 is a simplified example of a map of estimated cloud cover levels based on current measurement data, according to various embodiments;
FIGs 4A-4E are simplified examples of maps of predicted cloud cover levels, according to various embodiments;
FIG. 5 is a simplified example of a cloud cover forecast, according to various embodiments;
FIG. 6 is a flow diagram illustrating method steps of a method for forecasting solar power generation, according to various embodiments; and
FIG. 7 illustrates a network system, configured to implement one or more aspects of the various embodiments.

### DETAILED DESCRIPTION

Forecasting of demand and consumption of electrical power is an important task for electrical utilities, municipalities, etc. If demand and consumption are under predicted and the actual demand and consumption exceeds the generated power, then brownouts can occur. As a result, electrical utilities often keep extra power generation facilities up and running so that there is a ready reserve should actual demand (e.g., measured in units kilo Watts - kW) and consumption (e.g., measured in units kilo Watt-hours - kWh) be higher than expected. Keeping extra power generation facilities up and running is expensive, so the goal of electrical utilities is to minimize the level of ready reserve. The common use of localized solar power generation systems (e.g., using household photovoltaic installations/solar systems) allows electrical utilities to reduce the amount of electricity that needs to be generated using non-solar generation systems. The localized solar power generation systems reduce operating costs for the electrical utilities, but significantly complicates the prediction of how much non-solar generation is needed to meet a desired ready reserve because the amount of solar power generated by the solar power generation systems can vary greatly over small areas due to the constant movement and changes in cloud cover that might be reducing generation in a first solar power generation system while not affecting a second solar power generation system located nearby.

To address this problem, electrical utilities often use one or more techniques to model solar irradiance or cloud cover over geographic regions where solar power generation systems are known to be installed and feed electric power back to the electrical power distribution grid. None of these existing models provide sufficiently accurate mid-term (e.g., fifteen-minute to one hour or so) forecasts of solar irradiance or cloud cover to allow the electrical utilities to ramp up or ramp down non-solar electricity production in advance of forecasted decreases or increases in local solar power generation due to changing weather and cloud conditions.

Numerical weather prediction (NWP) models produce forecasts at a large scale that span geographic regions much larger (e.g., tens or hundreds of kilometers or larger in size) than small regions, such as neighborhoods where local solar power generation systems are located. When using NWP models, electrical utilities typically apply a weather or cloud cover prediction uniformly over a large geographic area even though solar irradiance is often highly variable across such large geographic regions. In addition, these forecasts are typically best for forecast horizons of three hours or more, which are not particularly helpful to the electrical utilities.

Satellite imagery decomposition leverages sequences of satellite images to predict large-scale cloud movement. The large-scale cloud movement is then used to produce large-scale forecasts of solar irradiance that are applied equally to all solar power generation systems within the geographic area covered by the forecast. Like NWP models, these forecasts do not account for the likely high variability of solar irradiance across such large geographic regions.

Eye-in-the-sky cameras capture real-time images of microscale cloud cover. The sequence of images is used to predict, in real-time, microscale cloud movement which in turn is used to forecast solar irradiance for the geographic footprint covered by the camera images. These forecasts of solar irradiance can then be inferred to apply to premises located nearby. However, eye-in-the sky camera systems are expensive and have not been implemented in many areas. Thus, predictions from eye-in-the-sky camera systems are not available in many areas.

Ground-based luminosity sensors collect in real-time global horizontal irradiance (GHI). The GHI data can then be inferred to apply to solar power generation systems located near the sensors. However, real-time forecasts of GHI are limited to short-term (e.g., fifteen minutes or less) forecast horizons because the GHI measurements do not track cloud movement directly. Further, GHI sensor systems have not been implemented in many areas.

Solar inverter data for all or a sample of solar power generation systems can be used to accurately indicate a current level of solar power generation for the respective solar power generation systems. When scaled against clear sky solar power generation for the respective solar power generation systems, solar irradiance levels at the respective solar power generation systems can be determined. These solar irradiance levels can then be used to estimate the solar irradiance levels at nearby solar power generation systems. However, this approach depends on the willingness of the owners of the solar power generation systems to share their raw solar inverter data with an electrical utility. In addition, the solar inverter data provides only current solar power production information and not forecasts of future solar power generation.

Disclosed below are techniques for using a small number of sensors located or positioned in or near a geographic region or geographical area to provide forecasts of solar irradiance/ solar insolation within small sub-regions or solar neighborhoods of the geographic regions. The techniques include using solar irradiance levels over multiple sampling periods from the sensors to determine the direction and speed (e.g., a velocity) of cloud movement across the geographic region. The direction and speed of the cloud movement is used to predict a sequence of future positions of clouds currently over and affecting the solar irradiance at the sensors. Cloud position and thickness from different sequences of future positions of clouds (e.g., sequences predicted from different initial points in time) are then combined to forecast the cloud cover in each of the sub-regions within the geographic region. The forecast of cloud cover in a particular sub-region is then used to predict solar irradiance and solar power generation for solar power generation systems in that sub-region.

At least one technical advantage of the disclosed techniques is that, with the disclosed techniques, forecasts of solar irradiance levels have greater accuracy and finer geographical granularity than previously used techniques. The disclosed techniques also allow for the generation of the forecasts of solar irradiance levels using fewer or less expensive sensors that are already installed in the geographic regions than previously used techniques. In addition, the disclosed techniques also provide medium-term (e.g., fifteen minutes to one hour or so ahead) forecasts for solar irradiance levels. As a result, better forecasts of local solar power generation estimates are possible, which allows electrical utilities to better manage electricity generation using non-solar generation systems.

### Localized Solar Irradiance and Solar Power Generation Forecasting

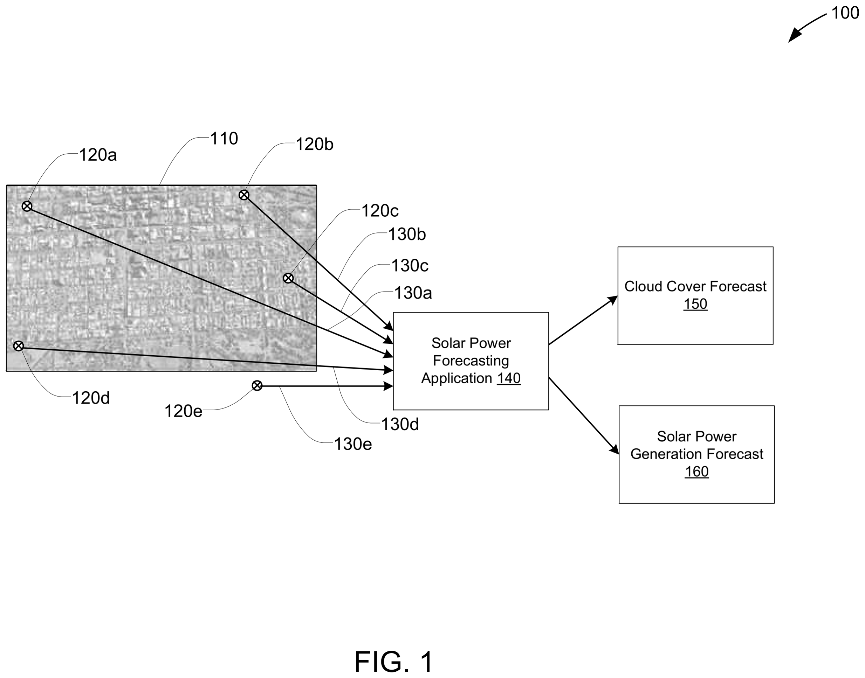

FIG. 1 illustrates a flow diagram for forecasting solar power generation for a geographic region, according to various embodiments. As shown in FIG. 1, a flow diagram 100 includes, without limitation, a geographic region 110, a plurality of sensors 120, measurement data 130, a solar power forecasting application 140, a cloud cover forecast 150, and a solar power generation forecast 160. In operation, solar power forecasting application 140 receives measurement data 130 (e.g., irradiance, cloud cover, or similar data) from the plurality of sensors 120. Solar power forecasting application 140 the uses past and present measurement data 130 to generate cloud cover forecast 150 for a future point in time. Solar power forecasting application 140 then uses cloud cover forecast 150 along with information about solar power generation systems within geographic region 110 to generate solar power generation forecast 160 for geographic region 110.

As shown, geographic region 110 is representative of a residential or commercial area that might be found within or near a city or town. It is understood that geographic region 110 is representative and that other geographic regions of different sizes and/or shapes are possible or that include different arrangements of structures, roads, etc. In some embodiments, geographic region 110 corresponds to part or all of low-volage electricity region, such as a region supplied by a transformer, substation, and/or the like.

Located within or near geographic region are five sensors 120a-120e (collectively sensors 120). As shown, sensors 120a-120d are within geographic region 110, but sensor 120e is located just outside geographic region 110. For example, sensor 120a is located near an upper-left (e.g., northwest) corner of geographic region 110. Each of sensors 120 includes one or more sensors from which solar irradiance or from which solar irradiance can be derived at the location of the sensor 120. For example, a sensor could be a pyrometer or other light level sensor associated with a smart streetlight, a weather station, a solar power generation system, and/or any other suitable measurement device, sensor device, sensor system, and/or the like. In most areas, sensors 120 such as those described herein are already present in most developed areas and do not need to be added to practice the disclosed techniques. The solar irradiance or similar data from the one or more sensors of each sensor 120 are then read by or transmitted to solar power forecasting application 140 as measurement data 130. Although only five sensors 120 are shown associated with geographic region 110, more or fewer sensors 120 located in the same or different locations are possible.

Measurement data 130 includes solar irradiance or similar data for each sensor 120. For example, sensor 120c generates measurement data 130c. Measurement data 130 includes solar irradiance or similar data for both a current period of time or measurement period (e.g., current solar irradiance levels) and past periods of time (e.g., five minutes ago, ten minutes ago, etc.). For each measurement period, the measurement data 130 can include an instantaneous solar irradiance (e.g., a reading at the corresponding instant a time), an average across the corresponding measurement interval (e.g., the entire five minutes since the previous measurement period), or an average across a portion of the corresponding measurement period (e.g., a last thirty seconds or minute before the end of the corresponding measurement period).

Solar power forecasting application 140 uses measurement data 130 received from sensors 120 to generate various cloud information. First, solar power forecasting application 140 uses measurement data 130 from the current measurement period to determine a current level of cloud cover at each of sensors 120. The current level of cloud cover is modeled as cloud with a specific thickness (e.g., how much the cloud blocks light from the sun) and centered at the sensor 120. The measurement data 130 for the current measurement period is then compared to measurement data 130 from previous measurement periods to determine the speed and direction of the clouds. For example, if a thick cloud is detected over sensor 120a at 6:00 and a similar thick cloud is detected over sensor 120b fifteen minutes later, the thick cloud has a roughly rightward (e.g., eastern) direction with a speed that allows the thick cloud to move from a location of sensor 120a to a location of sensor 120b in fifteen minutes.

Solar power forecasting application 140 then projects the locations of the known cloud cover over sensors 120 forward in time to create a sequence of future positions of the clouds over a grid or map of sub-regions within geographic region 110. For example, the cloud cover measured and modeled at time 6:00 can be projected forward based on the cloud speed and direction to generate a grid of predicted cloud positions at the times of 6:05, 6:10, 6:15, . . ., 6:55, 7:00, etc.

Because the number of sensors 120 is small, it is not generally possible for sensors 120 to measure solar irradiance or cloud cover levels in all locations and sub-regions within geographic region 110. To address this, solar power forecasting application 140 combines the grids of predicted cloud positions that have been projected forward different amounts of time to generate cloud cover forecast 150. For example, to predict the cloud positions at 6:15, solar power forecasting application 140 combines the prediction projected forward from the cloud positions identified in measurement data 130 from different measurement periods. In more detail, the cloud positions measured at 6:10 and projected forward five minutes to 6:15 are combined with the cloud positions measured at 6:05 and projected forward ten minutes to 6:15, the cloud positions measured at 6:00 and projected forward fifteen minutes to 6:15, and so forth. This allows a large cloud to be identified in different measurement periods using a same sensor 120 and all of the detections of the large cloud to be included in cloud cover forecast 150. In some cases, if the various sequences of future positions of the clouds do not include a predicted cloud over one or more of the sub-regions of geographic region 110, a cloud based on an hourly cloud cover forecast for geographic region 110 can be used for these one or more sub-regions. Although the hourly cloud cover forecast is not as accurate as the future positions of the clouds based on measurement data 130 and cloud movement information, the hourly cloud cover forecast helps fill the gaps in predicted cloud cover of the sub-regions for which the limited number of sensors 120 and cloud movement information do not provide a prediction. For example, unless the cloud movement is largely vertical (e.g., is not largely northernly or southerly), it is unlikely that a cloud detected by sensor 120a or sensor 120d will have a projected future position between the locations of sensors 120a and 120d.

Solar power forecasting application 140 then uses cloud cover forecast 150 and information about solar power generation systems within geographic region 110 to generate solar power generation forecast 160. For each solar power generation system in geographic region 110, solar power forecasting application 140 determines the sub-region where that solar power generation system is located. Solar power forecasting application 140 then determines the cloud cover for that sub-region indicated in cloud cover forecast 150 and uses that cloud cover to scale the clear-sky solar power generation for the solar power generation system to generate a solar power generation forecast for the solar power generation system. The solar power generation forecast for each of the solar power generation systems in geographic region 110 are then added together to generate solar power generation forecast 160 for geographic region 110.

### Forecasting System

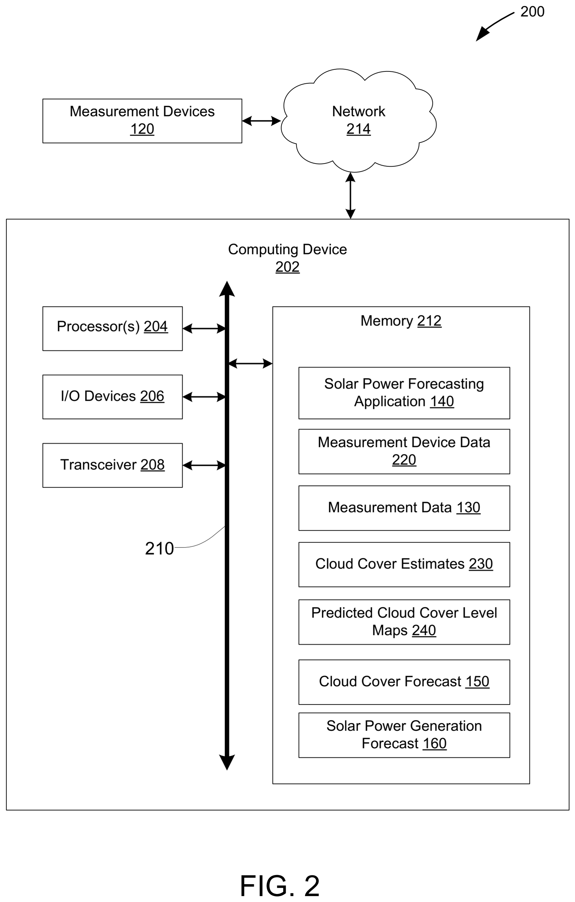

FIG. 2 is a block diagram illustrating a system 200 for forecasting solar power generation for a region, according to various embodiments. As shown, system 200 includes, without limitation, sensors 120, a computing device 202, and a network 214. Computing device 202 includes, without limitation, one or more processors 204, I/O devices 206, a transceiver 208, an interconnect 210, and memory 212. Memory 212 stores, without limitation, solar power forecasting application 140, sensor data 220, measurement data 130, cloud cover estimates 230, predicted cloud cover level maps 240, cloud cover forecast 150, and solar power generation forecast 160.

Computing device 202 is representative of any technically feasible computing device. For example, computing device 202 can be any server or backend system that receives measurement data 130 from sensors 120 and uses measurement data 130 to generate cloud cover forecast 150 and/or solar power generation forecast 160 as described in further detail below. Although computing device 202 is shown as a single device, computing device 202 can be implemented using any combination of one or more computing devices, servers, and/or the like.

The one or more processors 204 coordinate operations of computing device 202. In various embodiments, processor(s) 204 include any hardware configured to process data and execute software applications. Each of processor(s) 204 can be any technically feasible processing device configured to process data and execute program instructions. For example, processor(s) 204 could include one or more central processing units (CPUs), digital signal processors (DSPs), graphics processing units (GPUs), application-specific integrated circuits (ASICs), field-programmable gate arrays (FPGAs), microprocessors, microcontrollers, other types of processing units, and/or a combination of different processing units. Processor(s) 204 can include a real-time clock (RTC) (not shown) according to which processor(s) 204 maintain an estimate of the current time. The estimate of the current time can be expressed in Universal Coordinated Time (UTC), although any other standard of time measurement can also be used.

I/O devices 206 include devices configured to receive input, devices configured to provide output, and devices configured to both receive input and provide output. For example, I/O devices 206 can include a display device to show information about a geographic region (e.g., geographic region 110), sensors 210, the activity of solar power forecasting application 140, the computational results of solar power forecasting application 140, and/or the like. I/O devices 206 can further include one or more user input devices (e.g., buttons, knobs, keys, etc.) to control and/or configure the operation of solar power forecasting application 140. In some embodiments, I/O devices 206 further include one or more sensors (not shown).

Transceiver 208 is configured to transmit and/or receive information between computing device 202 and one or more other devices, such as sensors 120, using network 214. For example, transceiver 208 transmits one or more messages to request measurement data 130 from sensors 120 and/or receive measurement data 130 from sensors 120. Transceiver 208 can further exchange messages with other computing systems (not shown) to share cloud cover forecast 150, solar power generation forecast 160. For example, these other computing systems could use solar power generation forecast 160 to scale non-solar electricity consumption.

Interconnect 210 can be any technically feasible collection of one or more buses or communication mechanisms for sharing information and data between the components of computing device 202, including, but not limited to, processor(s) 204, I/O devices 206, transceiver 208, and/or memory 212. For example, interconnect can include

Memory 212 can include a random-access memory (RAM) module, a flash memory unit, or any other type of memory unit or combination thereof. Processor(s) 204 is configured to read data from and write data to memory 212. In various embodiments, memory 212 includes non-volatile memory, such as optical drives, magnetic drives, flash drives, or other storage. In some embodiments, separate data stores, such as an external data stores (not shown) included in a network ("cloud storage") can supplement the memory 212. Solar power forecasting application 140 within memory 212 can be executed by processor(s) 204 to implement the overall functionality of computing device 202. Memory 212 can further store data such as any of the data associated with solar power forecasting application 140, sensor data 220, measurement data 130, cloud cover estimates 230, predicted could over level maps 240, cloud cover forecast 150, and solar power generation forecast 160.

Network 214 can represent, for example, any technically feasible network or number of networks, including a wide area network (WAN) such as the Internet, a local area network (LAN), a Wi-Fi network, a cellular network, or a combination thereof. Network 214 coupling computing device 202 with sensors 120.

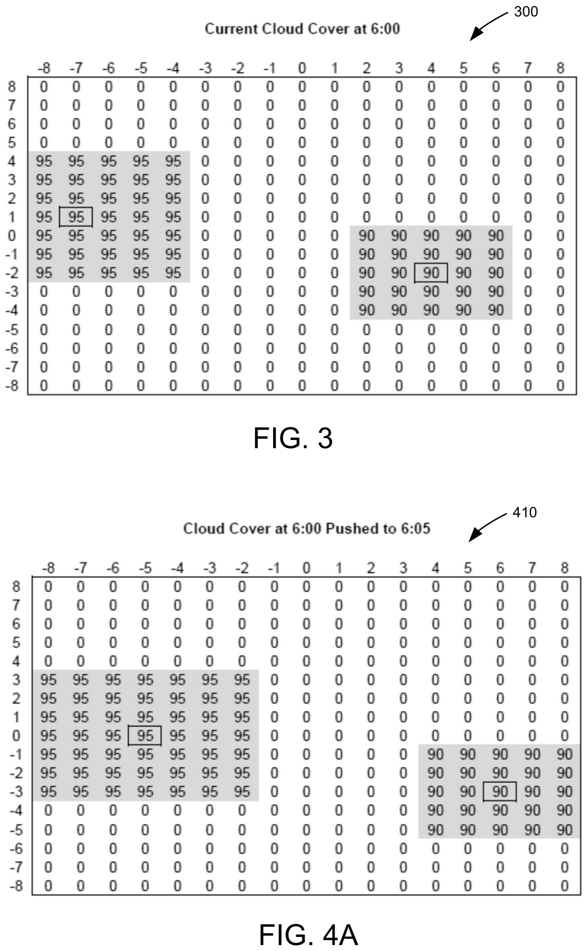

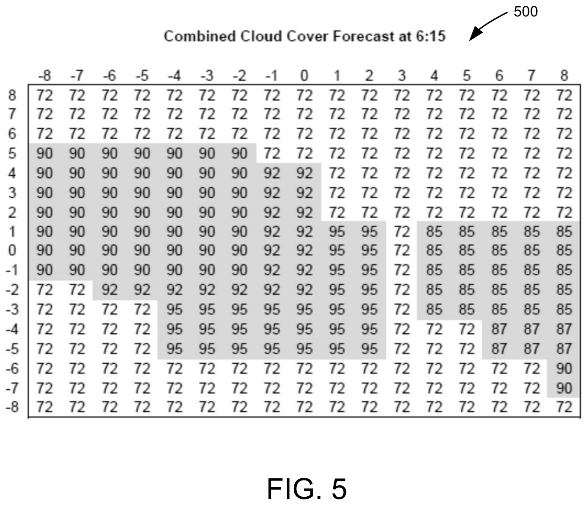

Solar power forecasting application 140 is responsible for using measurement data 130 received from sensors 120 to generate various cloud information, which, in turn is used to generate cloud cover forecast 150 and solar power generation forecast 160. The operation of solar power forecasting application 140 is described with reference to the various examples of the map of cloud cover levels in FIG. 3, the maps of predicted cloud cover in FIGs 4A-4E, and the cloud cover forecast of FIG. 5. However, it is understood that these examples are not to be representative of all possible maps or forecasts because the sizes of geographic regions, the locations of sensors, and current weather conditions would generate different maps and forecasts.

Solar power forecasting application 140 begins by identifying one or more geographic regions (e.g., geographic region 110) for which cloud cover and solar power generation forecasts are desired. For example, solar power forecasting application 140 could receive input from a user indicating the geographic regions of interest, load the list of geographic regions from a file or database, and/or the like. Each of the geographic regions is identified by a latitude and longitude of a center of the geographic region and a size of the geographic region. In some embodiments, the geographic region can be specified in a different fashion, such as latitude and longitude of a corner, the latitude and longitude of the four corners. In some embodiments, the shape of a geographic region can be non-rectangular. For example, a list of geographic regions is shown in Table 1.

**Table 1 - Example List of Geographic Regions**

| **Region Identifier** | **Latitude of Center** | **Longitude of Center** | **Size of Region (KM²)** |
|---|---|---|---|
| Region_1 | -34.553972 | 138.361238 | 2.5 KM² |
| Region_2 | Latitude_2 | Longitude_2 | 3 KM² |
| Region_3 | Latitude_3 | Longitude_3 | 4 KM² |

Although three geographic regions are shown in Table 1, solar power forecasting application 140 can work with fewer or more geographic regions. For simplicity of description, the following description describes the analyses and computation performed for a single geographic region (e.g., geographic region 110), but it is understood that the same analyses and computations can be performed for additional geographic regions to generate results for those additional geographic regions.

Solar power forecasting application 140 then accesses a list of sensors 120 associated with geographic region 110. The list of sensors 120 can be stored as sensor data 220 along with additional information about measurements devices 120 as described below. An example list of sensors 120 is shown in Table 2. As indicated in Table 2, each sensor 120 has a location expressed as a latitude and a longitude and a geographic region to which sensor 120 is associated. For example, Table 2 shows that sensors 120 with identifiers Device_4 and Device_5 are associated with multiple geographic regions. Such an arrangement is consistent with assigning sensor 120e to a geographic region located below/south of geographic region 110.

**Table 2 - Example List of Sensors**

| **Sensor Identifier** | **Sensor Latitude** | **Sensor Longitude** | **Associated Region Identifier** |
|---|---|---|---|
| Device_1 | -34.5611050 | 138.3518810 | Region_1 |
| Device_2 | -34.5522540 | 138.3516410 | Region_1 |
| Device_3 | -34.5515050 | 138.3638640 | Region_1 |
| Device_4 | -34.5547010 | 138.3729400 | Region_1 |
| Device_5 | -34.5625860 | 138.3645180 | Region_1 |
| Device_4 | -34.5547010 | 138.3729400 | Region_2 |
| Device_5 | -34.5625860 | 138.3645180 | Region_2 |

Solar power forecasting application 140 then computes the distance between each pair of sensors 120 associated with the geographic region. Because the Earth is not flat, the distances can be computed using the Haversine formula (Equation 1) when there is not a significant change in altitude between sensors. ${Distance}^{J , K} = 2 r {sin}^{- 1} \left(\sqrt{\frac{1 - cos \left(Δφ\right) + \left[cos\left({φ}_{J}\right)cos\left({φ}_{K}\right)\left(1-cos\left(Δϑ\right)\right)\right]}{2}}\right)$ Equation 1 where *Distance^{J,K}* is the distance in kilometers between sensor (J) and sensor (K), r is the radius of the Earth (e.g., 6,371 kilometers), and Δ*φ* is the difference in latitudes between the latitude for sensor K (*φ_{K}* ) and the latitude for sensor J (*φ_{J}* ). Solar power forecasting application 140 can add the distances to sensor data 220 as shown in the example of Table 3. Solar power forecasting application 140 further computes the distances between the sensors 120 and the center of the geographic region.

**Table 3 - Example Chart of Distances between Sensors**

| | Device_1 | Device_2 | Device_3 | Device_4 | Device_5 |
|---|---|---|---|---|---|
| Device_1 | | 984.43 | 1540.92 | 2055.75 | 1168.84 |
| Device_2 | 984.43 | | 1122.50 | 1969.45 | 1646.34 |
| Device_3 | 1530.92 | 1122.50 | | 903.97 | 1233.61 |
| Device_4 | 2055.75 | 1969.45 | 903.97 | | 1167.71 |
| Device_5 | 1168.84 | 1646.34 | 1233.61 | 1167.71 | |
| Center | 1167.62 | 899.42 | 364.81 | 1074.72 | 1003.82 |

Solar power forecasting application 140 further divides the geographic region into a grid of equally sized sub-regions. For example, each sub-region can have a size of 30.7848 meters per second of latitude and 24.384 meters per second of longitude. Using sub-regions of this size, a 2.5 kilometer by 2.5 kilometer geographic region is divided into a grid of sub-regions that is 81 sub-regions tall (e.g., south to north) and 103 sub-regions wide (e.g., west to east). Each sub-region is indexed with a latitude and longitude index with the sub-region being indexed as sub-region (0, 0) being in the center of the geographic region. For the 2.5 kilometer by 2.5 kilometer geographic region, the upper-left/northwest sub-region would be sub-region (40, -51) and the lower-right/southeast sub-region would be sub-region (-40, 51).

Solar power forecasting application 140 then determines in which of the sub-regions each of sensors 120 are located. The sub-region for a particular sensor 120 is determined by computing the distance in latitude and longitude between the particular sensor 120 and the center of the geographic region, converting the distances to meters, dividing by the number of meters in the corresponding direction of the size of each sub-region, and then rounding to the nearest integer. The sub-region indexes are stored in sensor data 220. Table 4 is an example of sub-regions identified for sensors Device_1 to Device_5.

**Table 3 - Example Sub-regions for Sensors**

| **Sensor Identifier** | **Latitude Index** | **Longitude Index** |
|---|---|---|
| Device_1 | -26 | -34 |
| Device_2 | 6 | -35 |
| Device_3 | 9 | 9 |
| Device_4 | -3 | 42 |
| Device_5 | -31 | 12 |

Solar power forecasting application 140 further determines the bearing between the pairs of sensors 120 based on differences between the latitude and longitude indexes of the sensors 120 in the pair. The bearings are stored in sensor data 220. Table 5 is an example of bearings between sensors Device_1 to Device 5.

**Table 5 - Example Chart of Bearings between Sensors**

| Latitude Bearing | | | | | |
|---|---|---|---|---|---|
| From/To | Device_1 | Device_2 | Device_3 | Device_4 | Device_5 |
| Device_1 | 0 | 32 | 35 | 23 | -5 |
| Device_2 | -32 | 0 | 3 | -9 | 37 |
| Device_3 | -35 | -3 | 0 | -12 | -40 |
| Device_4 | -23 | -23 | 12 | 0 | -28 |
| Device_5 | 5 | 37 | 70 | 28 | 0 |

| Longitude Bearing | | | | | |
|---|---|---|---|---|---|
| From/To | Device_1 | Device_2 | Device_3 | Device_4 | Device_5 |
| Device_1 | 0 | -1 | 43 | 76 | 46 |
| Device_2 | 1 | 0 | 44 | 77 | 47 |
| Device_3 | -43 | -44 | 0 | 33 | 3 |
| Device_4 | -76 | -77 | -33 | 0 | -30 |
| Device_5 | -46 | -47 | -3 | 30 | 0 |

Solar power forecasting application 140 then receives measurement data 130 from each of sensors 120 for a current measurement period. If measurement data 130 is not a measure of solar irradiance, measurement data 130 is converted to solar irradiance values. Solar power forecasting application 140 further scales the measurement data 130 against the maximum clear sky irradiance for the latitude and longitude of the sub-region in which the respective sensor 120 is located according to Equation 2. ${CF}_{d , i}^{s} = \frac{Solar {Irradiance}_{d , i}^{s}}{Clear Sky Solar {Irradiance}_{d , i}^{N}}$ Equation 2 where ${CF}_{d , i}^{s}$ is the fraction of clear sky solar irradiance that is measured by sensor 120 on day (d) and time interval (i). ${CF}_{d , i}^{s}$ will range between 1.0 during time intervals with no cloud cover to close to 0.0 during time intervals with heavy cloud cover. *Solar* $Solar {Irradiance}_{d , i}^{s}$ is the solar irradiance value measured or calculated for sensor 120 on day (d) and time interval (i). $Clear Sky Solar {Irradiance}_{d , i}^{N}$ is an expected solar irradiance for sensor (s), on day (d) and time interval (i) under clear sky conditions. $Clear Sky Solar {Irradiance}_{d , i}^{N}$ can be calculated for a given latitude and longitude using any suitable calculator, such as the calculator available at https://gml.noaa.gov/grad/solcalc/.

Solar power forecasting application 140 then converts the scaled solar irradiance values to cloud cover fractions by subtracting the scaled solar irradiance values from 1.0 and then converting the cloud cover fractions to cloud cover percentages or levels by multiplying by 100. The cloud cover levels vary from zero (no clouds/clear sky conditions) to 100 (full clouds/dark conditions).

Solar power forecasting application 140 also determines a default cloud cover level for the geographic region. The default cloud cover level is determined from cloud cover estimates (e.g., hourly cloud cover estimates) for the geographic region, such as those provided by NWP models, satellite imagery decomposition, and/or the like. As the cloud cover estimates are updated during the day, solar power forecasting application 140 updates the default cloud cover level.

Next, solar power forecasting application 140 computes the speed and direction of clouds for the current measurement period based on measurement data 130 from the current measurement period and measurement data 130 from previous measurement periods. Because there are typically more than two sensors for the geographic region, simple correlations between measurement data 130 for the current measurement period and measurement data 130 for previous measurement periods are not very accurate for inferring the speed and direction of the clouds. A suitable modelling approach is to use Granger and Wald analyses to determine the most likely speed and direction for the current measurement period. The Granger analysis generates fit statistics for two regressions including a first constrained regression of Equation 3 and a second unconstrained regression of Equation 4. $\begin{matrix}Cloud Cover {Fraction}_{t}^{J} \\ = {β}_{1}^{J} Cloud Cover {Fraction}_{t - 1}^{J} + {β}_{2}^{J} Cloud Cover {Fraction}_{t - 2}^{J} \\ + {β}_{3}^{J} Cloud Cover {Fraction}_{t - 3}^{J} + {β}_{4}^{J} Cloud Cover {Fraction}_{t - 4}^{J} \\ + {β}_{5}^{J} Cloud Cover {Fraction}_{t - 5}^{J} + {e}_{t}^{J}\end{matrix}$ Equation 3 $\begin{matrix}Cloud Cover {Fraction}_{t}^{J} \\ = {β}_{1}^{J} Cloud Cover {Fraction}_{t - 1}^{J} + {β}_{2}^{J} Cloud Cover {Fraction}_{t - 2}^{J} \\ + {β}_{3}^{J} Cloud Cover {Fraction}_{t - 3}^{J} + {β}_{4}^{J} Cloud Cover {Fraction}_{t - 4}^{J} \\ + {β}_{5}^{J} Cloud Cover {Fraction}_{t - 5}^{J} + {γ}_{1}^{K} Cloud Cover {Fraction}_{t - 1}^{J} \\ + {γ}_{2}^{K} Cloud Cover {Fraction}_{t - 2}^{J} + {γ}_{3}^{K} Cloud Cover {Fraction}_{t - 3}^{J} \\ + {γ}_{4}^{K} Cloud Cover {Fraction}_{t - 4}^{J} + {γ}_{5}^{K} Cloud Cover {Fraction}_{t - 5}^{J} + {e}_{t}^{JK}\end{matrix}$ Equation 4 where $Cloud Cover {Fraction}_{t}^{J}$ is the cloud cover fraction for sensor (J) at time (t), *β.^{J}* are the regression coefficients for the constrained regression, ${e}_{t}^{J}$ is the regression error for the constrained regression, $Cloud Cover {Fraction}_{t}^{K}$ is the cloud cover fraction for sensor (K) at time (t), *γ.^{K}* are the regression coefficients for the unconstrained regression, and ${e}_{t}^{JK}$ is the regression error for the unconstrained regression. The Granger analysis is described in further detail in ranger, C. W. J. (1969). "Investigating Causal Relations by Econometric Models and Cross-spectral Methods". Econometrica. 37 (3), pp. 424-438, which is incorporated by reference.

The Wald analysis includes computing a test for statistical significance according to Equation 5. The Wald statistic is distributed as a Chi-Square distribution that determines whether the Granger time series (K) causes Granger time series (J), which in the context of measurement data 130 indicates whether the cloud cover level for the current measurement period at a first sensor 120 is due to the same cloud for a previous measurement period at a second sensor 120. When the Wald statistic is greater than 5.0, the causality is considered significant. Table 6 includes an example of Wald statistics that show that previous clouds at sensors Device_3, Device_4, and Device_5 result in a later cloud at Device_1. $Wald {Statistic}_{t}^{J , K} = \frac{\left(Unconstrained {R}^{2}-Constrained {R}^{2}\right) DFE}{\left(1-Unconstrained {R}^{2}\right) m}$ Equation 5 where *Unconstrained R²* is the R Squared from the unconstrained regression, *Constrained R*² is the R Squared from the constrained regression, *DFE* is the Error Degrees of Freedom for the unconstrained regression, and m is the number of coefficients for the unconstrained regression.

**Table 6 - Example Chart of Wald Statistics**

| **Model** | **Coefs** | **Err DF** | **R²** | **DFE** | **M** | **Wald Statistic** |
|---|---|---|---|---|---|---|
| Device_1 | 5 | 21 | 0.763 | 21 | 5 | |
| Device_1 to Device_2 | 10 | 16 | 0.925 | 16 | 10 | 3.5 |
| Device_1 to Device_3 | 10 | 16 | 0.946 | 16 | 10 | 5.4 |
| Device_1 to Device_4 | 10 | 16 | 0.951 | 16 | 10 | 6.1 |
| Device 1 to Device_5 | 10 | 17 | 0.955 | 17 | 10 | 7.3 |

To account for all of the possible complex interactions between the clouds over the various sensors 120 over time, solar power forecasting application 140 selects the model with the highest Wald statistic to determine the speed and direction of the clouds. In the example of Table 6, the highest Wald statistic is associated with the Device_1 to Device_5 model, indicating that clouds are moving from Device_5 toward Device_1. Solar power forecasting application 140 determines the direction based on the bearing from Device_5 to Device_1 stored in measurement data 130.

Solar power forecasting application 140 determines the speed of the clouds by evaluating the lagged terms for the unconstrained regression to determine the lagged term with the longest lag that is also statistically significant. For example, given the unconstrained coefficients of Table 7, solar power forecasting application 140 determines that the lag of the clouds is five due to the T-statistic of Sensor_5 with lag 5 being the longest lag that is also statistically significant (6.3). The speed of the clouds is then determined according to Equation 6 where the lag in minutes of the longest statistically significant lag. Solar power forecasting application 140 then scales the speed of the clouds to determine how many latitude and longitude indexes (e.g., how many sub-regions) the clouds traverse per measurement period. For the example of Table 7, this corresponds to a bearing and speed of (5 x 1/5, -46 x 1/5) or (1, -9) sub-regions every measurement period. $Cloud {Speed}_{t}^{K , J} = \frac{Distance _ K _ J}{Lag Minutes x 60 second / Minute}$ Equation 6

**Table 7 - Example Chart of Unconstrained Regression Coefficients**

| **Variable** | **Coefs** | **StdErr** | **T-Stat** | **P-Value** |
|---|---|---|---|---|
| Device_1 to Sensor_5 LagDep (1) | 1.057 | 0.109 | 9.657 | 0.00% |
| Device_1 to Sensor_5 LagDep (2) | -0.118 | 0.156 | -0.755 | 46.05% |
| Device_1 to Sensor_5 LagDep (3) | -0.166 | 0.154 | -1.075 | 29.75% |
| Device_1 to Sensor_5 LagDep (4) | 0.498 | 0.149 | 3.336 | 0.39% |
| Device_1 to Sensor_5 LagDep (5) | -0.344 | 0.109 | -3.143 | 0.59% |
| Sensor_5 Lag1 | -9.864 | 5.267 | -1.873 | 7.84% |
| Sensor_5 Lag2 | 9.144 | 5.914 | 1.546 | 14.05% |
| Sensor_5 Lag3 | -5.260 | 6.060 | -0.868 | 39.76% |
| Sensor_5 Lag4 | 2.122 | 5.528 | 0.384 | 70.58% |
| Sensor_5 Lag5 | 3.855 | 0.612 | 6.300 | 0.00% |

Solar power forecasting application 140 then models the cloud fraction detected by each sensor 120 as a corresponding normal distribution using Equation 7, which varies in both the latitude and longitude directions. The mean µ of the normal distribution in both directions is set to zero, which centers the modeled cloud at the location of the sensor 120. The standard deviation σ of the normal distribution depends on the computed cloud fraction (e.g., computed using Equation 2) of the model cloud. The value of the standard deviation is determined based on the computed cloud fraction for the sensor 120 during the current measurement period as indicated in Table 8. $f \left(x\right) = \frac{1}{σ \sqrt{2 π}} {e}^{- 0.5 {\left(\frac{x - μ}{σ}\right)}^{2}}$ Equation 7

**Table 8 - Cloud Model Standard Deviation based on Cloud Fractions**

| **Cloud Fractions Range** | **Standard deviation *σ* (meters)** |
|---|---|
| 0.8 to 1.0 | 500 |
| 0.6 to 0.8 | 1,250 |
| 0.4 to 0.6 | 2,500 |
| 0.2 to 0.4 | 2,500 |
| 0.0 to 0.2 | 5,000 |

Solar power forecasting application 140 then maps each cloud to the sub-regions around the center of the cloud based on how many sub-regions away from the center of the cloud (e*.*g., from sensor m) is in both latitude and longitude using Equation 8, where *m_lat* is the latitude index of the sub-region where sensor m is located, *m_long* is the longitude index of the sub-region where sensor m is located, a is the latitude index of the sub-region, b is the longitude index of the sub-region, and f(x) is determine using Equation 7 with the standard deviation determined for sensor 120 from Table 8. The results from Equation 8 are then scaled based on the largest cloud probability for the cloud (e*.*g., the sub-region (*m_lat, m_long*) is 1.0). This results in a *Normalized Probability (m, a,b)* for the cloud attributed to sensor m in sub-region (a, b) for the current measurement period. $Cloud Probability \left(m, a, b\right) = f \left(m_lat-a\right) \times f \left(m_long-b\right)$ Equation 8

Solar power forecasting application 140 then combines the contribution of each of the M sensors 120 and corresponding cloud model for each sub-region (a, b) of the geographic region according to Equation 9 to generate a current level of cloud cover over the geographic region. The estimates of cloud cover level for the current measurement period are stored in cloud cover estimates 230. $Current Cloud Cover \left(a, b\right) = \frac{{\sum }_{m = 1}^{M} Cloud Cover Fraction \left(m\right) \times Normalized Probablity \left(m, a, b\right)}{{\sum }_{m = 1}^{M} Normalized Proablity \left(m, a, b\right)}$ Equation 9

FIG. 3 is a simplified example of a map 300 of estimated cloud cover levels based on current measurement data, according to various embodiments. As shown in FIG. 3, map 300 shows the current cloud cover at 6:00 for a geographic region that has been divided into 289 sub-regions that are indexed in latitude from -8 to +8 and are indexed in longitude from -8 to 8 with sub-region (0, 0) being at the center of the geographic region. The geographic region of map 300 is associated with two sensors 120, a first sensor 120 located in sub-region (1, -7) and a second sensor 120 located in sub-region (-2, 4). Based on first measurement data 130 measured by first sensor 120, a first cloud centered at sub-region (1, -7) has been modeled as shown by the sub-regions having a current cloud cover level of 95. As indicated in FIG. 3, not all of the portions of the first cloud are shown in map 300 because portions of the first cloud are not located in the geographic region corresponding to map 300. Based on second measurement data 130 measured by second sensor 120, a second cloud centered at sub-region (-2, 4) has been modeled as shown by the sub-regions having a current cloud cover level of 92. As shown, the second cloud is somewhat smaller and lighter than the first cloud. And although FIG. 3 shows map with 289 sub-regions and two associated sensors 120, this depiction is representative only and a map for a geographic region with fewer or more than 289 sub-regions and fewer or more than two sensors 120 is possible. In addition, the modeling of the cloud cover levels in map 300 has been simplified to better explain the content of map 300 and it is possible that larger and/or overlapping clouds with greater cloud cover level variations (e.g., showing the falloff consistent with the normal distributions of Equations 7 and 8) are possible. The remaining sub-regions of map 300 include a cloud cover level of zero indicating that the modeling of clouds from measurement data 130 for the current measurement period is not able to estimate a cloud cover level for those sub-regions. Solar power forecasting application 140 stores map 300 in cloud cover estimates 230.

Referring back to FIG. 2, after determining map 300 of estimated cloud cover levels, solar power forecasting application 140 projects the estimated cloud cover levels of map 300 forward in time for several time intervals (e.g., time intervals corresponding to one, two, three, or more measurement periods). Solar power forecasting application 140 uses the direction and speed of the clouds to determine how far to move the estimated cloud cover levels for the modeled cloud across the geographic region. This results in solar power forecasting application 140 generating a sequence of maps of predicted cloud cover levels for the geographic region. Solar power forecasting application 140 stores each of the maps of predicted cloud cover levels as predicted cloud cover level maps 240. An example of this forward projection is shown in FIGs. 4A-4E, which are simplified examples of maps of predicted cloud cover levels, according to various embodiments. FIG. 4A shows a map 410 of predicted cloud cover levels at 6:05 based on measurement data 130 collected at 6:00 and modeled as shown in map 300 under the assumption that the clouds in map 300 are moving two sub-regions to the right/east and one sub-region down/south every five minutes. As can be seen the projection of the first cloud places the center of the first cloud in sub-region (0, 5) at 6:05. Map 410 also shows that the portions of the first cloud were outside the geographic region of map 300 at 6:00 are now within map 410 at 6:05. Similarly, the projection of the second cloud places the center of the second cloud in sub-region (-3, 6).

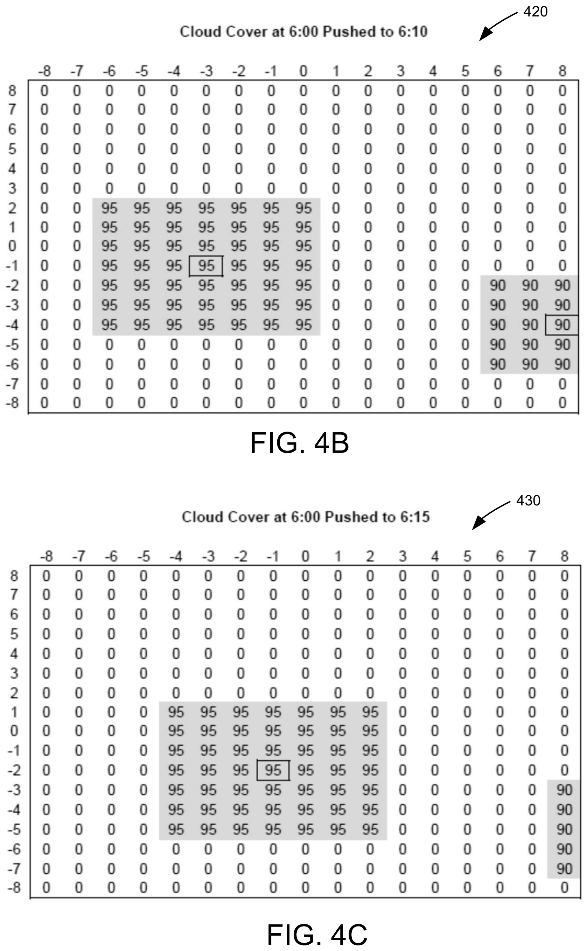

FIG. 4B shows a map 420 of predicted cloud cover levels at 6:10 based on measurement data 130 collected at 6:00 and modeled as shown in map 300 under the assumption that the clouds in map 300 are continuing to move two sub-regions to the right/east and one sub-region down/south every five minutes. As can be seen, the projection of the first cloud places the center of the first cloud in sub-region (-1, -3) at 6:10. Similarly, the projection of the second cloud places the center of the second cloud in sub-region (-4, 8). Map 420 also shows that portions of the second cloud are outside the geographic region of map 420 at 6:10.

FIG. 4C shows a map 430 of predicted cloud cover levels at 6:15 based on measurement data 130 collected at 6:00 and modeled as shown in map 300 under the assumption that the clouds in map 300 are continuing to move two sub-regions to the right/east and one sub-region down/south every five minutes. As can be seen, the projection of the first cloud places the center of the first cloud in sub-region (-2, -1) at 6:10. Similarly, the projection of the second cloud places the center of the second cloud outside of map 430 in what would be sub-region (-5, 10) if map 420 were to include such a sub-region. Map 430 also shows that further portions of the second cloud are now outside the geographic region of map 430 at 6:15.

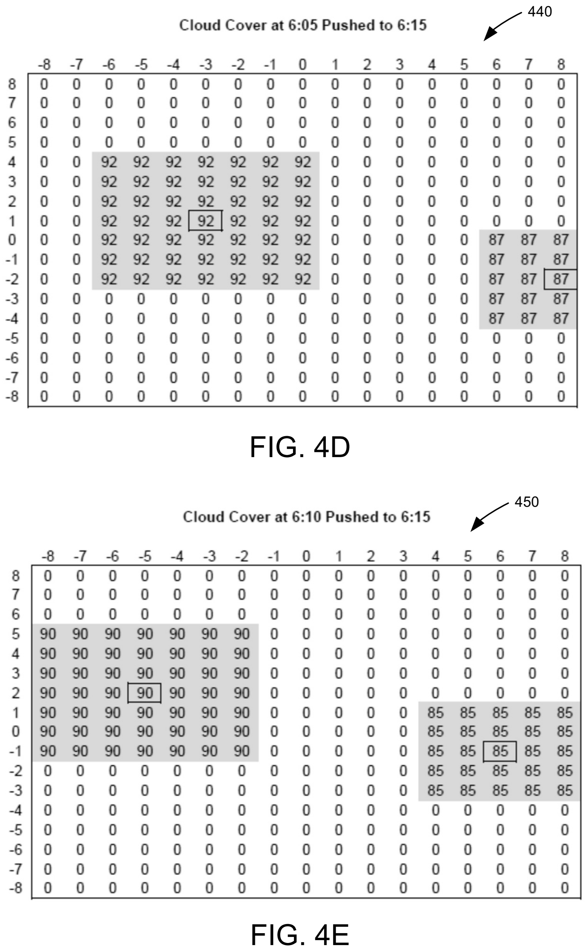

FIG. 4D shows a map 440 of predicted cloud cover levels at 6:15 based on measurement data 130 collected for the measurement period of 6:05. As can be inferred from map 440, the first cloud lightened from an estimated cloud cover level of 95 at 6:00 to an estimated cloud cover level of 92 at 6:05 but remained over sensor 120 in sub-region (1, -7) at 6:05. In addition, the direction and speed of the clouds has shifted so that the clouds are now moving two sub-regions to the right/east every five minutes indicated by the first cloud now being predicted to centered in sub-region (1, -3) at 6:15. A first portion of the first cloud is predicted to be centered over sub-region (-2, 1) at 6:15 and a second portion of the first cloud is predicted to centered over sub-region (1, -3) at 6:15. By projecting models of a cloud based on measurement data 130 collected during different measurement periods, solar power forecasting application 140 is able to model larger clouds using fewer sensors 120. Similarly, the second cloud has lightened from an estimated cloud cover level of 90 at 6:00 and is centered at sub-region (-2, 8) at 6:15.

FIG. 4E shows a map 450 of predicted cloud cover levels at 6:15 based on measurement data 130 collected for the measurement period of 6:10. As can be inferred from map 450, the first cloud has continued to lighten to an estimated cloud cover level of 90 and the direction and speed of the clouds has further shifted to moving right/east two sub-regions every five minutes and up/north one sub-region every five minutes. As a result, the first cloud is predicted to be centered over sub-region (1, -3) at 6:15 based on measurement data 130 captured by sensor 120 located in sub-region (1, -7) at 6:10. Similarly, the second cloud is predicted to have a cloud cover level of 85 and be centered over sub-region(-1, 6) at 6:15 based on measurement data 130 captured by sensor 120 located in sub-region (-2, 4).

Referring back to FIG. 2, after projecting estimated cloud cover levels forward from multiple measurement periods, solar power forecasting application 140 combines predicted cloud cover levels that have been projected forward different amounts of time to generate a cloud cover forecast for each of the sub-regions of the geographic region, which results in cloud cover forecast 150. More specifically, for each sub-region of the geographic region, solar power forecasting application 140 selects the predicted cloud cover level that has been projected forward the least or shortest amount of time. For sub-region (a, b) at 6:15, solar power forecasting application 140 selects the cloud cover level for sub-region (a, b) projected forward from measure data 130 captured during the measurement period corresponding to 6:10. If there is no prediction in the map of predicted cloud cover levels projected forward from the estimated cloud cover levels at 6:10 (e*.*g., the map includes a zero for sub-region (a, b), solar power forecasting application 140 checks the map of predicted cloud cover levels projected forward from the estimated cloud cover levels at 6:05. As long as each of the maps checked by solar power forecasting application 140 does not include a prediction, solar power forecasting application continues using a map of predicted cloud cover levels that has been generated using a longer projection period. If none of the maps of predicted cloud cover levels include a prediction for sub-region (a, b), solar power forecasting application 140 uses the default cloud cover level (e.g., the hourly cloud cover forecast for the geographic region).

FIG. 5 is a simplified example of a cloud cover forecast 500, according to various embodiments. As shown, solar power forecasting application 140 has generated cloud cover forecast 500 from maps 430, 440, and 450 of predicted cloud cover levels and a default cloud cover level of 72. For example, the cloud cover forecast of 90 for sub-region (4, -6) is based on map 450 projected forward from 6:10. The cloud cover forecast of 90 for sub-region (0, -2) is also based on map 450 projected forward from 6:10 even though both maps 430 and 440 also have predictions because the prediction from map 450 has been projected forward the least amount of time and is likely to be the most accurate of the three predictions. The cloud cover forecast for sub-region (-4, 0) is 95 because map 430 is the only map having a prediction for sub-region (-4, 0) even though solar power forecasting application 140 has cloud cover predictions for sub-regions in maps 440 and 450. The cloud cover forecast for sub-region (7, 3) is 72 (the default cloud cover level) because none of maps 430, 440, or 440 include a predicted cloud cover level for sub-region (7, 3). As cloud cover forecast 500 indicates, solar power forecasting application 140 is able to predict cloud cover forecasts for a large number of sub-regions of the geographic region even though sensors 120 are located in only a few of the sub-regions. In addition, cloud cover forecast 500 is more accurate than relying on just measurement data from a single measurement period or from prediction techniques that cover larger areas (e.g., the hourly cloud cover forecasts). In addition, solar power forecasting application 140 is able to generate cloud cover forecasts for multiple time periods (e.g., forecasting cloud cover at 6:25 based on maps of predicted cloud cover level projected from 6:20, 6:15, 6:10, 6:05, 6:00, etc.).

Solar power forecasting application 140 then uses cloud cover forecast 150 to determine solar power generation forecast 160 for the geographic region. Solar power forecasting application 140 first identifies the corresponding sub-region in which each of the solar power generation systems that is currently generating solar power is located and scales the maximum clear sky solar power generation for that solar power generation system during the forecasted time period. For example, if a first solar power generation system is located in sub-region (-5, 7) and the solar power generation forecast is for 6:15 based on cloud cover forecast 500, the cloud cover forecast of 87 is used to scale the clear sky power generation level by (100 - 87) (e.g., generation when the solar irradiance is 13 percent of the clear-sky solar irradiance) to generate the solar power generation forecast for the first solar power generation system. Solar power forecasting application 140 computes a similar solar power generation forecast for each solar power generation system in the geographic region and adds them together. The total is the solar power generation forecast 160 for the geographic region. The calculations can further be repeated for different forecasted measurement periods to generate a short-, medium, or long-range forecast of solar power generation for the geographic regions. These forecasts can then be used to help better scale non-solar electricity prediction based on anticipated demand and consumption.

### Solar Irradiance and Solar Power Generation Forecasting

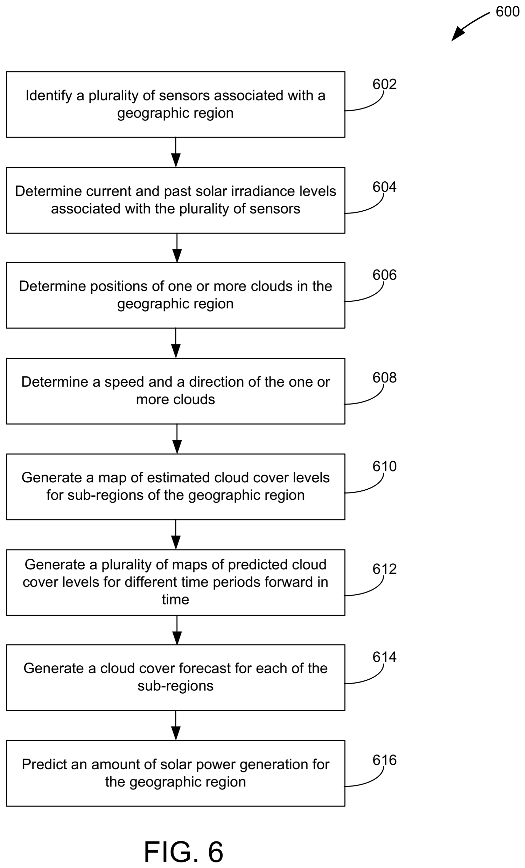

FIG. 6 is a flow diagram illustrating method steps of a method for forecasting solar power generation, according to various embodiments. Although the method steps are described with reference to the embodiments of FIGs. 1-5, persons skilled in the art will understand that any system configured to implement the method steps, in any order, falls within the scope of the present disclosure.

As shown, a method 600 begins at step 602, where solar power forecasting application 140 identifies a plurality of sensors 120 associated with a geographic region. For example, solar power forecasting application 140 could receive input from a user indicating a geographic region of interest, load the geographic region from a file or database, and/or the like. For example, during step 602, solar power forecasting application 140 could identify the information for the geographic region in any row of Table 1.

At step 604, solar power forecasting application 140 determines current and past solar irradiance levels associated with sensors 120. For example, solar power forecasting application 140 can receive the solar irradiance levels as measurement data 130 from each of sensors 120 for a current measurement period. If measurement data 130 is not a measure of solar irradiance, measurement data 130 is converted to solar irradiance values. Solar power forecasting application 140 further scales against the maximum clear sky irradiance for the latitude and longitude of the sub-region in which the respective sensor 120 is located using Equation 2 to determine a fraction of clear sky solar irradiance for each solar irradiance level. Solar power forecasting application 140 then converts the fraction of clear sky solar irradiance to a cloud cover fraction by subtracting the fraction of clear sky solar irradiance. Solar power forecasting application 140 further saves the solar irradiance levels and/or cloud cover fractions for use as past solar irradiance levels or cloud cover fractions respectively, for use in further applications of method 600.

At step 606, solar power forecasting application 140 determines positions of one or more clouds in the geographic region. Solar power forecasting application 140 uses the current cloud fraction level for each sensor 120 to model a cloud centered over the sensor 120 as a normal distribution in two-dimensions. A thickness/darkness of the cloud is determined based on the current cloud fraction level as is a standard deviation of the distribution, which controls a size of the cloud. In some embodiments, a table is used to determine the standard deviation from the current cloud fraction level. The distribution determines the likelihood that a cloud detected at a sensor 120 extends to other portions of the geographic region around the sensor 120.

At step 608, solar power forecasting application 140 determines a speed and a direction of the one or more clouds. To determine the speed and the direction of the one or more clouds, solar power forecasting application 140 correlates the current and past measurement data 130 using one or more regression techniques, such as the time-series regressions of Granger analysis to determine which combination of sensors 120 have the highest likelihood of a same cloud moving from over a first sensor 120 to a second sensor. The pair of sensors 120 for which measurement data 130 is correlated in a statistically significant fashion (e.g., using the Wald statistic) and are farthest apart are used to select the direction of the one or more clouds. Solar power forecasting application 140 then uses the lag (in measurement periods) in the correlated measurement data 130 between the selected pair of sensors 120 and the distance between the pair of sensors 120 to determine the speed of the one or more clouds.

At step 610, solar power forecasting application 140 generates a map of estimated cloud cover levels for sub-regions of the geographic region. Solar power forecasting application 140 combines a contribution of each cloud modeled during step 608 to each sub-region of the geographic region using Equation 9 to generate the map of estimated cloud cover levels, such as map 300. In some embodiments, tor sub-regions where Equation 9 does not include an estimated cloud cover level, the estimated cloud cover level is recorded as zero for those sub-regions.

At step 612, solar power forecasting application 140 generates a plurality of maps of predicted cloud cover levels for different time periods forward in time. Each map of the plurality of maps of predicted cloud cover levels represents a projection of the map of estimated cloud cover levels a different number of measurement periods so that the plurality of maps of predicted cloud cover levels forms a sequence of maps that show how the one or more clouds move in the speed and direction determined during step 608. For example, during step 612, solar power forecasting application 140 can generate maps 410, 420, and 430 from map 300. Solar power forecasting application 140, can further generate maps 440 and 440 as projections forward from other measurement periods (e.g., different repetitions of method 600).

At step 614, solar power forecasting application 140 generates a cloud cover forecast 150 for each of the sub-regions. Solar power forecasting application 140 uses the maps of predicted cloud cover levels from different measurement periods that provide a prediction for a specific future time period. When more than one of the maps includes a predicated cloud cover level for a particular sub-region, solar power forecasting application 140 selects the predicted cloud cover level that was projected forward the least amount of time during step 612 is used for that particular sub-region. For sub-regions that do not include a predicted cloud cover level (e.g., have a value of zero) in any of the maps of predicted cloud cover levels, solar power forecasting application 140 uses a default cloud cover level, such as an hourly cloud cover forecast level for the geographic region. For example, solar power forecasting application 140 generates cloud cover forecast 500 from maps 430, 440, and 450 for the time period 6:15.

At step 616, solar power forecasting application 140 predicts an amount of solar power generation for the geographic region (e.g., solar power generation forecast 160). Solar power forecasting application 140 uses the cloud cover forecast 150 determined during step 614 to forecast solar power generation for each of the solar power generation systems in the geographic region. Solar power forecasting application 140 first identifies the corresponding sub-region in which each of the solar power generation systems that is currently generating solar power is located and determines the forecasted cloud cover for that sub-region from cloud cover forecast 150. Solar power forecasting application 140 then scales the maximum clear sky solar power generation for that solar power generation system using the forecast of cloud cover in the corresponding sub-region. For example, if a first solar power generation system is located in sub-region (-5, 7) in cloud cover forecast 500, the cloud cover forecast of 87 is used to scale the clear sky power generation level by (100 - 87) (e.g., generation when the solar irradiance is 13 percent of the clear-sky solar irradiance) to generate the solar power generation forecast for the first solar power generation system. Solar power forecasting application 140 then computes a similar solar power generation forecast for each solar power generation system in the geographic region and adds them together. The total is solar power generation forecast 160 for the geographic region. Solar power generation forecast 160 can be used to scale non-solar electricity generation based on anticipated demand or consumption for the relevant time period.

In some embodiments, steps 612 and 614 can be repeated multiple times to generate a cloud cover forecast 150 and a solar power generation forecast 160 for the geographic region for multiple time periods. In some embodiments, method 600 can be repeated one or more times. For example, method 600 can repeated with each measurement period so that with each new measurement period an additional sequence of maps of predicted cloud cover levels is generated and used to further refine the cloud cover forecast 150 for each of the sub-regions. Additionally or alternatively, method 600 can be repeated for different geographic regions to generate cloud cover forecasts 150 and solar power generation forecasts 160 for different geographic regions and/or a combination of geographic regions.

### Network Infrastructure

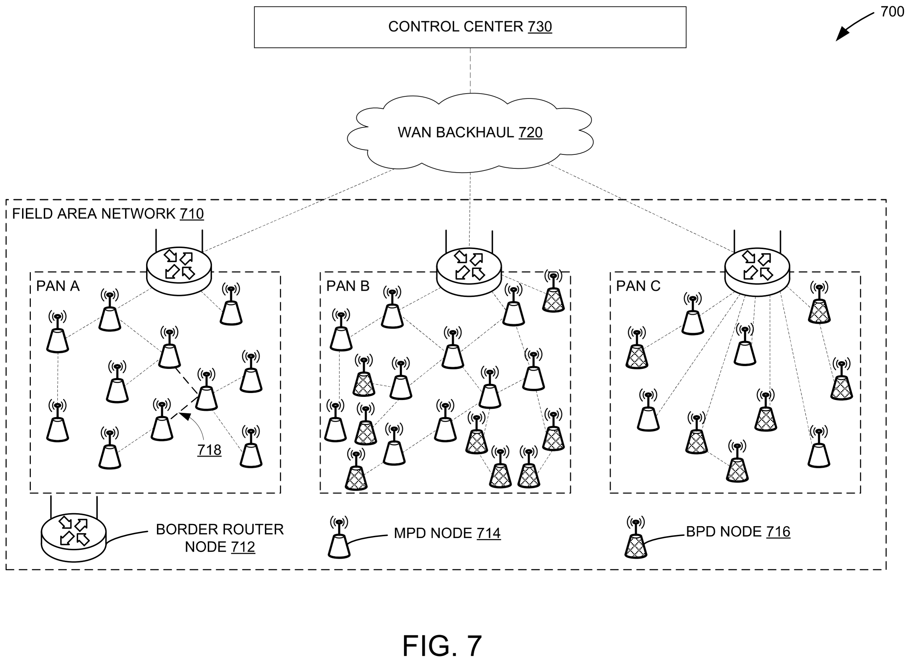

FIG. 7 illustrates a network system configured to implement one or more aspects of the various embodiments. As shown, network system 700 includes a field area network (FAN) 710, a wide area network (WAN) backhaul 720, and a control center 730. FAN 710 is coupled to control center 730 via WAN backhaul 720. Control center 730 is configured to coordinate the operation of FAN 710.

FAN 710 includes personal area network (PANs) A, B, and C. PANs A and B are organized according to a mesh network topology, while PAN C is organized according to a star network topology. Each of PANs A, B, and C includes various network devices including at least one border router node 712 and one or more mains-powered device (MPD) nodes 714. PANs B and C further include one or more battery-powered device (BPD) nodes 716. Any of the one or more MPD nodes 714 or the BPD nodes 716 can be used to implement the techniques discussed above with respect to FIGs. 1-6. In various embodiments, sensors 120 and/or computing device 202 are implemented as node 714 or 716. In some embodiments, computing device 202 is implemented as or is part of control center 730.

MPD nodes 714 draw power from an external power source, such as mains electricity or a power grid. MPD nodes 714 typically operate on a continuous basis without powering down for extended periods of time. BPD nodes 716 draw power from an internal power source, such as a battery. BPD nodes 716 typically operate intermittently and power down, go to very low power mode, for extended periods of time in order to conserve battery power.

MPD nodes 714 and BPD nodes 716 are coupled to, or included within, a utility distribution infrastructure (not shown) that distributes a resource to consumers. MPD nodes 714 and BPD nodes 716 gather sensor data related to the distribution of the resource, process the sensor data, and communicate processing results and other information to control center 730. Border router nodes 712 operate as access points to provide MPD nodes 714 and BPD nodes 716 with access to control center 730.

Any of border router nodes 712, MPD nodes 714, and BPD nodes 716 are configured to communicate directly with one or more adjacent nodes via bi-directional communication links 718. The communication links 718 may be wired or wireless links, although in practice, adjacent nodes of a given PAN exchange data with one another by transmitting data packets via wireless radio frequency (RF) communications. The various node types are configured to perform a technique known in the art as "channel hopping" in order to periodically receive data packets on varying channels. As known in the art, a "channel" may correspond to a particular range of frequencies. In one embodiment, a node may compute a current receive channel by evaluating a Jenkins hash function based on a total number of channels and the media access control (MAC) address of the node.

In some examples, MPD nodes 714 or BPD nodes 716 can communicate directly with control center 730 via respective cellular communication links. In such examples, MPD nodes 714 or BPD nodes 716 can transmit messages to and/or receive messages from control center 730 without using border router nodes 712. Furthermore, in some examples, control center 730 is implemented as MPD nodes 714 or BPD nodes 716. In such examples, MPD nodes 714 and BPD nodes 716 can perform the control and/or data analysis functions described herein with respect to control center 730.

In some examples, each node within a given PAN can implement a discovery protocol to identify one or more adjacent nodes or "neighbors." A node that has identified an adjacent, neighboring node can establish a bi-directional communication link 718 with the neighboring node. Each neighboring node may update a respective neighbor table to include information concerning the other node, including one or more of the MAC address of the other node, listening schedule information for the other node, a received signal strength indication (RSSI) of the communication link 618 established with that node, and the like.

Nodes can compute the channel hopping sequences of adjacent nodes to facilitate the successful transmission of data packets to those nodes. In embodiments where nodes implement the Jenkins hash function, a node computes a current receive channel of an adjacent node using the total number of channels, the MAC address of the adjacent node, and a time slot number assigned to a current time slot of the adjacent node.

Any of the nodes discussed above may operate as a source node, an intermediate node, or a destination node for the transmission of data packets. A given source node can generate a data packet and then transmit the data packet to a destination node via any number of intermediate nodes (in mesh network topologies). The data packet can indicate a destination for the packet and/or a particular sequence of intermediate nodes to traverse in order to reach the destination node. In one embodiment, each intermediate node can include a forwarding database indicating various network routes and cost metrics associated with each route.

Nodes can transmit messages and/or data packets across a given PAN and across WAN backhaul 720 to control center 730. Similarly, control center 730 can transmit messages and/or data packets across WAN backhaul 720 and across any given PAN to a particular node included therein. As a general matter, numerous routes can exist which traverse any of PANs A, B, and C and include any number of intermediate nodes, thereby allowing any given node or other component within network system 700 to communicate with any other node or component included therein.

Control center 730 includes one or more server machines (not shown) or other computing devices (not shown) configured to operate as sources for, or destinations of, messages and/or data packets that traverse within network system 700. The server machines can query nodes within network system 700 to obtain various data, including raw or processed sensor data, power consumption data, node/network throughput data, status information, and so forth. The server machines can also transmit commands and/or program instructions to any node within network system 700 to cause those nodes to perform various operations. In one embodiment, each server machine is a computing device configured to execute, via a processor, a software application stored in a memory to perform various network management operations.

In sum, the disclosed techniques use sensors located in or near a geographic region to provide forecasts of solar irradiance/ solar insolation within small sub-regions of the geographic regions. The techniques include using solar irradiance levels over multiple sampling periods from the sensors to determine the direction and speed of cloud movement across the geographic region. The direction and speed of the cloud movement is used to predict a sequence of future positions of clouds currently over and affecting the solar irradiance at the sensors. Cloud position and thickness from different sequences of future positions of clouds (e.g., sequences predicted from different initial points in time) are then combined to forecast the cloud cover in each of the sub-regions within the geographic region. The forecast of cloud cover in a particular sub-region is then used to predict solar irradiance and solar power generation for solar power generation systems in that sub-region.

At least one technical advantage of the disclosed techniques is that, with the disclosed techniques, forecasts of solar irradiance levels have greater accuracy and finer geographical granularity than previously used techniques. The disclosed techniques also allow for the generation of the forecasts of solar irradiance levels using fewer or less expensive sensors that are already installed in the geographic regions than previously used techniques. In addition, the disclosed techniques also provide medium-term (e.g., fifteen minute to one hour or so) forecasts for solar irradiance levels. As a result, better forecasts of local solar power generation estimates are possible, which allows electrical utilities to better manage electricity generation using non-solar generation systems.

The following clauses describe aspects of various embodiments.
1. In some embodiments, a method comprises determining, by a computing device, solar irradiance levels associated with a geographic region, determining, by the computing device based on the solar irradiance levels, a speed, a direction, and positions for one or more clouds in the geographic region, generating, by the computing device based on the positions of the one or more clouds at a first time, a map of estimated cloud cover levels for individual-sub-regions of the geographic region, generating, by the computing device for each of a plurality of different time periods after the first time, respective maps of predicted cloud cover levels for the individual sub-regions, wherein the respective maps of predicted cloud cover levels are generated by projecting the map of estimated cloud cover levels forward in time based on the direction and the speed of the one or more clouds and an amount of time after the first time, and predicting, by the computing device based on the respective maps of predicted cloud cover levels, an amount of solar power generation for a photovoltaic installation located in a first sub-region of the geographic region.
2. The method of clause 1, wherein determining the solar irradiance levels comprises receiving the solar irradiance levels from respective sensors included in a respective smart streetlight, a respective micro weather station, or a respective photovoltaic installation.
3. The method of clauses 1 or 2, wherein the solar irradiance levels are scaled as a percentage of clear sky solar irradiance.
4. The method of any of clauses 1-3, wherein determining the speed and the direction for the one or more clouds comprises converting the solar irradiance levels to current and past cloud cover levels.
5. The method of any of clauses 1-4, wherein determining the solar irradiance levels comprises receiving measurement data from a plurality of sensors, and determining the speed and the direction of the one or more clouds is based on a direction and a distance between two of the plurality of sensors.
6. The method of any of clauses 1-5, wherein determining the solar irradiance levels comprises receiving measurement data from a plurality of sensors, and generating the map of estimated cloud cover levels comprises modeling cloud cover around a first sensor of the plurality of sensors as a normal distribution centered over the first sensor and scaled based on a current cloud cover level at the first sensor.
7. The method of any of clauses 1-6, wherein generating an estimated cloud cover level for the first sub-region comprises totaling a contribution of cloud cover estimated for the first sub-region for each of the one or more clouds.
8. The method of any of clauses 1-7, wherein generating a first map of the respective maps of predicted cloud cover levels comprises shifting the map of estimated cloud cover levels a distance based on the speed of the one or more clouds and in a direction based on the direction of the one or more clouds.
9. The method of any of clauses 1-8, further comprising generating, by the computing device, a first cloud cover forecast for the first sub-region of the geographic region by selecting the first cloud cover forecast from a first map of the respective maps of predicted cloud cover levels having a prediction for the first sub-region and that has been projected forward a least amount of time.
10. The method of any of clauses 1-9, further comprising generating, by the computing device, a second cloud cover forecast for a second sub-region of the geographic region based on an hourly cloud cover forecast for the geographic region.
11. The method of any of clauses 1-10, further comprising scaling non-solar electricity production based on the amount of solar power generation.
12. In some embodiments, one or more non-transitory computer-readable media store instructions which, when executed by one or more processors, cause the one or more processors to perform operations comprising determining measurements of amounts of light at locations in or near a geographical area, converting the measurements of the amounts of light to amounts of cloud cover at the locations, determining, based on the amounts of cloud cover, a speed and a bearing for one or more clouds over the geographical area, computing, based on the amounts of cloud cover at the locations, respective estimates of cloud cover at a first point in time for respective solar neighborhoods into which the geographical area is divided, computing, for each of a plurality of future points in time after the first point in time, respective predictions of cloud cover for the respective solar neighborhoods, wherein the respective predictions of cloud cover are generated by moving the respective estimates of cloud cover based on the speed and the bearing for the one or more clouds and a respective amount of time a respective future point in time is after the first point in time, and forecasting, based on the respective predictions of cloud cover for a first solar neighborhood of the respective solar neighborhoods, an amount of electricity generated by a solar power generation system in the first solar neighborhood.
13. The one or more non-transitory computer-readable media of clause 12, wherein computing the respective estimates of cloud cover at the first point in time comprises modeling a cloud over a first light level sensor of a plurality of light levels sensors, the cloud having a size and a thickness based on an amount of cloud cover at a location of the first light level sensor.
14. The one or more non-transitory computer-readable media of clauses 12 or 13, wherein computing a first prediction of cloud cover for the respective solar neighborhoods comprises shifting the respective estimates of cloud cover along the bearing for a distance based on the speed and the respective amount of time.
15. The one or more non-transitory computer-readable media of any of clauses 12-14, wherein at least one of the amounts of light can be determined from electricity generated by a respective solar power generation system.
16. The one or more non-transitory computer-readable media of any of clauses 12-15, wherein determining the speed and the bearing of the one or more clouds comprises performing Granger and Wald statistical analyses of the amounts of cloud cover.
17. In some embodiments, a computing device comprises one or more processors, and a memory storing executable instructions which, when executed by the one or more processors, cause the one or more processors to perform operations comprising determining cloud cover levels at a plurality of positions in a region based on light levels sensed at the plurality of positions, determining, based on the cloud cover levels, a velocity of cloud movement over the region, estimating, based on the cloud cover levels at the plurality of positions, levels of cloud cover at a first time over a grid of sub-regions into which the region is divided, projecting the estimated levels of cloud cover at the first time forward for respective amounts of time to generate a plurality of respective estimates of future levels of cloud cover for the sub-regions, a distance and direction of the projecting being based on the velocity of cloud movement and the respective amounts of time, and estimating, based on the estimates of future levels of cloud cover for a first sub-region of the sub-regions, an amount of solar power generated by one or more photovoltaic installations located in the first sub-region.
18. The computing device of clause 17, wherein the light levels are measured by respective sensors included in a respective smart streetlight, a respective micro weather station, or a respective photovoltaic installation installed at a respective position of the plurality of positions.
19. The computing device of clauses 17 or 18, wherein estimating the levels of cloud cover at the first time comprises modeling clouds using normal distributions centered over respective sub-regions in which the plurality of positions are located.
20. The computing device of any of clauses 17-19, wherein the operations further comprise determining a forecast of cloud cover level for the first sub-region of the sub-regions at a second time based on a respective estimate of future level of cloud cover for the first sub-region at the second time that has been projected forward a shortest amount of time.

Any and all combinations of any of the claim elements recited in any of the claims and/or any elements described in this application, in any fashion, fall within the contemplated scope of the present protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function (s). It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow. Moreover, in the above description, numerous specific details are set forth to provide a more thorough understanding of the various embodiments. However, it will be apparent to one of skill in the art that the inventive concepts may be practiced without one or more of these specific details.

## Claims

1. A method comprising:
determining, by a computing device, solar irradiance levels associated with a geographic region;
determining, by the computing device based on the solar irradiance levels, a speed, a direction, and positions for one or more clouds in the geographic region;
generating, by the computing device based on the positions of the one or more clouds at a first time, a map of estimated cloud cover levels for individual-sub-regions of the geographic region;
generating, by the computing device for each of a plurality of different time periods after the first time, respective maps of predicted cloud cover levels for the individual sub-regions, wherein the respective maps of predicted cloud cover levels are generated by projecting the map of estimated cloud cover levels forward in time based on the direction and the speed of the one or more clouds and an amount of time after the first time; and
predicting, by the computing device based on the respective maps of predicted cloud cover levels, an amount of solar power generation for a photovoltaic installation located in a first sub-region of the geographic region.

2. The method of claim 1, wherein determining the solar irradiance levels comprises receiving the solar irradiance levels from respective sensors included in a respective smart streetlight, a respective micro weather station, or a respective photovoltaic installation.

3. The method of claim 1, wherein determining the solar irradiance levels comprises determining the solar irradiance levels from electricity generated by at least one photovoltaic installation located in geographic region.

4. The method of any preceding claim, wherein the solar irradiance levels are scaled as a percentage of clear sky solar irradiance.

5. The method of any preceding claim, wherein determining the speed and the direction for the one or more clouds comprises converting the solar irradiance levels to current and past cloud cover levels.

6. The method of claim 1, wherein:
determining the solar irradiance levels comprises receiving measurement data from a plurality of sensors; and
determining the speed and the direction of the one or more clouds is based on a direction and a distance between two of the plurality of sensors.

7. The method of claim 1, wherein:
determining the solar irradiance levels comprises receiving measurement data from a plurality of sensors; and
generating the map of estimated cloud cover levels comprises modeling cloud cover around a first sensor of the plurality of sensors as a normal distribution centered over the first sensor and scaled based on a current cloud cover level at the first sensor.

8. The method of claim 6, wherein generating an estimated cloud cover level for the first sub-region comprises totaling a contribution of cloud cover estimated for the first sub-region for each of the one or more clouds.

9. The method of any preceding claim, wherein generating a first map of the respective maps of predicted cloud cover levels comprises shifting the map of estimated cloud cover levels a distance based on the speed of the one or more clouds and in a direction based on the direction of the one or more clouds.

10. The method of any preceding claim, further comprising generating, by the computing device, a first cloud cover forecast for the first sub-region of the geographic region by selecting the first cloud cover forecast from a first map of the respective maps of predicted cloud cover levels having a prediction for the first sub-region and that has been projected forward a least amount of time.

11. The method of claim 10, further comprising generating, by the computing device, a second cloud cover forecast for a second sub-region of the geographic region based on an hourly cloud cover forecast for the geographic region.

12. The method of any preceding claim, further comprising scaling non-solar electricity production based on the amount of solar power generation.

13. The method of any preceding claim, wherein determining the speed and the direction of the one or more clouds comprises performing Granger and Wald statistical analyses of the solar irradiance levels.

14. One or more computer-readable media storing instructions which, when executed by one or more processors, cause the one or more processors to perform the method of any one of claims 1 to 13.

15. A computing device comprising:
one or more processors; and
a memory storing executable instructions which, when executed by the one or more processors, cause the one or more processors to perform the method of any one of claims 1 to 13.
